# EUROPÄISCHE PATENTSCHRIFT

(11) **EP 3 590 798 B1**
(45) Veröffentlichungstag und Bekanntmachung des Hinweises auf die Patenterteilung: **03.11.2021**
(21) Anmeldenummer: 18182221.4
(22) Anmeldetag: 06.07.2018
(51) Int. Cl.: B62D 33/04

(54) **KOFFERAUFBAU EINES NUTZFAHRZEUGS MIT PARALLELEN PORTALEN**
BOX BODY OF A COMMERCIAL VEHICLE WITH PARALLEL PORTALS
COFFRE DE VÉHICULE UTILITAIRE À PORTIQUES PARALLÈLES

(43) Veröffentlichungstag der Anmeldung: 08.01.2020
(73) Patentinhaber: Schmitz Cargobull AG, 48341 Altenberge (DE)
(72) Erfinder: Beelmann, Reinhard, 45721 Haltern am See (DE)
(74) Vertreter: Cohausz & Florack

(56) Entgegenhaltungen:
- EP-A1- 2 103 505
- FR-A- 1 266 345
- FR-A1- 3 057 236
- US-A- 4 662 138
- US-A- 6 003 932
- US-A1- 2012 292 940
- US-B1- 6 988 761

## Beschreibung

Die Erfindung betrifft einen Kofferaufbau eines Nutzfahrzeugs, insbesondere Lastkraftwagens, Anhängers oder Sattelaufliegers, mit zwei Seitenwänden, einem Dach, einer Stirnwand und einer Rückwand, wobei die Seitenwände jeweils in einem oberen Randbereich über eine sich in Längsrichtung des Kofferaufbaus erstreckende Holmstruktur mit dem Dach verbunden sind, wobei die Seitenwände jeweils in einem unteren Randbereich mit einer Bodenstruktur des Kofferaufbaus verbunden sind, wobei die Seitenwände jeweils ein die Seitenwand wenigstens im Wesentlichen verschließendes Wandpaneel und zur Aussteifung der Seitenwände mehrere wenigstens im Wesentlichen parallel zueinander und beabstandet voneinander angeordnete Ständerelemente aufweisen, wobei sich die Ständerelemente jeweils wenigstens von der Bodenstruktur bis zu der der jeweiligen Seitenwand zugeordneten Holmstruktur erstrecken, wobei das Dach ein das Dach wenigstens im Wesentlichen verschließendes Wandpaneel und zur Aussteifung des Dachs mehrere wenigstens im Wesentlichen parallel zueinander und beabstandet voneinander angeordnete Balkenelemente aufweist und wobei sich die Balkenelemente jeweils von einer Holmstruktur zur gegenüberliegenden Holmstruktur erstrecken.

Nutzfahrzeuge, beispielsweise in Form von Lastkraftwagen, Anhängern und Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Aufbauten auf, welche der Aufnahme der zu transportierenden Güter in einem Laderaum dienen.

So sind beispielsweise Planenaufbauten bekannt, bei denen die Seitenwände und das Dach durch wenigstens eine Planeneinheit verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Planeneinheit entlang der Seitenwand verschoben werden kann, spricht man auch von sogenannten Curtainsidern.

Neben den Planenaufbauten sind beispielsweise auch Kofferaufbauten mit festen Seitenwänden, einer festen Stirnwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport, geeignet. Die Rückwand der Kofferaufbauten wird meist durch zwei Flügeltüren oder ein Rolltor verschlossen.

Die Stirnwand, das Dach und/oder die Seitenwände entsprechender Kofferaufbauten sind typischerweise zweischalig aufgebaut und umfassen somit eine äußere und eine innere, strukturgebende Decklage sowie eine zwischen den strukturgebenden Decklagen vorgesehene Kernlage. Während die strukturgebenden Decklagen typischerweise eine Schicht aus glasfaserverstärktem Kunststoff oder eine Metallschicht aufweisen, wird die Kernlage regelmäßig aus einem geschäumten Kunststoff gebildet. Dabei sind die innere Decklage und/oder die äußere Decklage nicht auf eine einzige Schicht beschränkt, sondern können selbst bedarfsweise mehrlagig aufgebaut sein.

Darüber hinaus sind Kofferaufbauten mit einschaligen Wandstrukturen bekannt, die einen Rahmen oder eine Gitterstruktur aufweisen, die von einem einzigen Paneel auf der Außenseite des Kofferaufbaus verschlossenen ist. Dabei ist das Paneel entweder einstückig ausgebildet oder es setzt sich aus mehreren nebeneinander angeordneten Paneelelementen zusammen.

Grundsätzlich sind die Seitenwände der Kofferaufbauten an ihren oberen Rändern mittels Holmstrukturen fest mit dem Dach und an ihren unteren Rändern mit einer Bodenstruktur verbunden. Die Holmstruktur sorgt dabei ebenso wie die Bodenstruktur für die eigentliche Verbindung und für die geschlossene Struktur des Kofferaufbaus. Regelmäßig kann die Holmstruktur in diesem Zusammenhang wahlweise dem Dach oder der Seitenwand zugeordnet sein bzw. werden. Eine eindeutige Zuordnung der Holmstrukturen zum Dach oder den Seitenwänden ist jedenfalls nicht immer gewährleistet. Die Bodenstruktur trägt regelmäßig den Ladeboden des Kofferaufbaus, auf dem die zu transportierende Ladung abgestellt werden kann. Alternativ oder zusätzlich umfasst die Bodenstruktur einen seitlichen oder umlaufenden Rahmen, mit dem die Seitenwände, die Stirnwand und die Rückwand verbunden sind und der unter anderem der Aussteifung des Kofferaufbaus dient.

Zur Aussteifung der Seitenwände können eine Mehrzahl von Ständerelementen vorgesehen sein, und zwar zwischen der Stirnwand und der Rückwand. Mithin handelt es sich bei den Ständerelementen nicht um Eckstützen an den seitlichen Rändern der Seitenwände, sondern um gegebenenfalls zusätzliche Ständerelemente, die sich vertikal bzw. quer zur Längserstreckung der Seitenwände erstrecken. Die Ständerelemente sind dabei entlang der Längserstreckung der jeweiligen Seitenwand parallel zueinander und voneinander beabstandet vorgesehen. Zudem erstrecken sich die Ständerelemente von der Bodenstruktur bis zur zugehörigen Holmstruktur, wobei die Ständerelemente mit der Bodenstruktur und der Holmstruktur verbunden sein können, um beispielsweise in Teilen das Dach abzustützen. Ferner können die Ständerelemente an der Innenseite des Wandpaneels mit einem Wandpaneel bzw. den Wandpaneelen fest verbunden sein.

Zur Aussteifung des Dachs kann das Dach analog zueinander parallele und voneinander beabstandete Balkenelemente aufweisen. Die Balkenelemente sind bedarfsweise quer zur Längserstreckung des Dachs ausgerichtet. Zum Abstützen des Dachs können sich die Balkenelemente von einer Holmstruktur an einer Längsseite des Dachs zur anderen Holmstruktur an der gegenüberliegenden Längsseite des Dachs erstrecken. Ferner können die Balkenelemente an der Innenseite des Wandpaneels des Dachs mit dem Wandpaneel verbunden sein.

Hinsichtlich der Konstruktion von Kofferaufbauten sind zum Teil gegenläufige Anforderungen zu berücksichtigen. So sollen die Kofferaufbauten einerseits möglichst steif und stabil ausgebildet sein, um eine lange Lebensdauer sicherzustellen. Andererseits sollen die Kofferaufbauten einen großen und gut zugänglichen Laderaum bereitstellen sowie ferner möglichst leicht sein, damit eine hohe Zuladung ermöglicht werden kann. Nicht zuletzt sollen die Kofferaufbauten aber kostengünstig gefertigt werden können, um eine hohe Wirtschaftlichkeit des Kofferaufbaus sicherstellen zu können. Um diesen und weiteren Anforderungen gerecht werden zu können, sind unterschiedliche Konstruktionen von Kofferaufbauten entwickelt und vorgeschlagen worden. Einige Merkmale der entsprechenden Kofferaufbauten sind allgemein zuvor beschrieben worden, ohne dass eine abschließende Aufzählung verstanden werden soll. Auch sind die vorgenannten Merkmale ebenso wenig in allen Kombinationen beschrieben, wie nicht beschrieben ist, mit welchen weiteren Elementen diese Merkmale kombiniert sind. Unabhängig davon ist ganz allgemein festzustellen, dass die vorgeschlagenen Kofferaufbauten die Anforderungen noch immer nicht gänzlich zufriedenstellend erfüllen, so dass hier ein weiterer Optimierungsbedarf besteht. Dokument FR 1 266 345 A offenbart einen Kofferaufbau gemäß dem Oberbegriff des Patentanspruchs 1.

Daher liegt der vorliegenden Erfindung die Aufgabe zugrunde, den Kofferaufbau der eingangs genannten und zuvor näher beschriebenen Art derart auszugestalten und weiterzubilden, dass ein stabiler und langlebiger Kofferaufbau mit geringerem Gewicht bereitgestellt werden kann, der sich möglichst zweckmäßig beladen und kostengünstig herstellen lässt.

Diese Aufgabe ist bei einem Kofferaufbau nach dem Oberbegriff von Anspruch 1 dadurch gelöst, dass die Wandpaneele der Seitenwände und/oder des Dachs jeweils eine Mehrzahl von nebeneinander angeordneten Paneelelementen aufweisen, dass die Paneelelemente sich wenigstens im Wesentlichen quer zur jeweiligen Seitenwand und/ oder dem Dach erstreckende Verbindungsbereiche bilden und dass die Ständerelemente und/oder die Balkenelemente wenigstens teilweise den Verbindungsbereichen der Paneelelemente der Seitenwände und/oder des Dachs zugeordnet sind.

Die Erfindung hat folglich erkannt, dass es zweckmäßig ist, die Ständerelemente der Seitenwände und die Balkenelemente des Dach zu unterschiedlichen Portalen zusammenzufassen und die Portale mehr oder weniger regelmäßig über die Länge des Kofferaufbaus zu verteilen. Zur Bildung der jeweiligen Portale werden die Ständerelemente der beiden Seitenwände in dem wenigstens im Wesentlichen selben Abstand zur Stirnwand oder zur Rückwand angeordnet, und zwar jeweils in Längsrichtung des Kofferaufbaus. In dem wenigstens im Wesentlichen selben Abstand von der Stirnwand bzw. der Rückwand wird zudem ein Balkenelement des Dachs abgeordnet, so dass jeweils zwei Ständerelemente von unterschiedlichen Seitenwänden und ein Balkenelement des Dachs zusammen zu einem Portal zusammengefasst werden. Dies bedeutet jedoch nicht, dass das Portal ausschließlich aus zwei Ständerelementen und einem Balkenelement bestehen muss. Insbesondere können noch Holmstrukturen Teile des Portals bilden.

Mithin können die Ständerelemente und das Balkenelement direkt miteinander verbunden sein. Erforderlich ist dies jedoch nicht, zumal die Ständerelemente und die Balkenelemente an den entsprechenden Seiten des Kofferaufbaus mit den Holmstrukturen verbunden sein können. Auf diese Weise sind dann auch die einzelnen Portale entlang der Längsrichtung des Kofferaufbaus stabil und hinreichend steif miteinander verbunden. Die Portale sind zudem untereinander über die Bodenstruktur miteinander verbunden, was der weiteren Aussteifung der Portale aber auch des Kofferaufbaus dient.

Der beschriebene Portalaufbau des Kofferaufbaus stellt mithin eine Reihe von umlaufenden Rahmenstrukturen bereit die untereinander wiederum über umlaufende Rahmenstrukturen verbunden sind. Auf diese Weise wird ein hohes Maß an Stabilität und Langlebigkeit des Kofferaufbaus mit einem geringen Materialeinsatz und damit Gewicht erreicht. Der geringe Materialeinsatz und die rahmenartige Konstruktion des Kofferaufbaus erlauben es zudem, einen großen Laderaum bereitzustellen, der sich zudem problemlos beladen lässt. Nicht zuletzt führt der verringerte Materialeinsatz und die umlaufenden Rahmenstrukturen zu einem geringen Herstellungsaufwand und damit zu geringen Herstellungskosten.

Der Portalaufbau umfasst eine Reihe von in Längsrichtung verteilter und quer zur Längsrichtung des Kofferaufbaus verteilter Portale. Die Ständerelemente und das Balkenelement jedes Portals sind wenigstens über die Holmstrukturen und die Bodenstruktur untereinander verbunden und bilden somit jeweils umlaufende Rahmenstrukturen, die sich quer zur Längsrichtung des Kofferaufbaus erstrecken. Da diese Portale bzw. umlaufenden Rahmenstrukturen untereinander zudem über die sich in Längsrichtung des Kofferaufbaus erstreckenden Holmstrukturen und die sich in Längsrichtung des Kofferaufbaus erstreckende Bodenstruktur verbunden sind, bilden jeweils zwei Portale zusammen mit den Holmstrukturen und der Bodenstruktur drei weitere Rahmenstrukturen. Zwei dieser Rahmenstrukturen sind parallel zur Längsrichtung des Kofferaufbaus ausgerichtet und den gegenüberliegenden Seitenwänden zugeordnet. Jede dieser Rahmenstrukturen umfasst jeweils ein Ständerelement der beiden zugehörigen Portale, wobei die beiden entsprechenden Ständerelemente jeweils einer gemeinsamen Seitenwand zugeordnet sind. Da die Balkenelemente jeweils mit den gegenüberliegenden Holmstrukturen verbunden sind, bilden jeweils zwei Portale zusammen mit den Holmstrukturen im Bereich des Dachs dritte Rahmenstrukturen, die in Längsrichtung des Kofferaufbaus hintereinander angeordnet sind.

Auf die beschriebene Weise ist es also möglich, den Kofferaufbau in einfacher Weise in Querrichtung durch eine Reihe von Portalen auszusteifen und zu stabilisieren und zugleich in einfacher Weise den Kofferaufbau in Längsrichtung über drei Reihen von umlaufenden Rahmenstrukturen, die den unterschiedlichen Seitenwänden und dem Dach zugeordnet sind, auszusteifen und zu stabilisieren. Zudem findet eine sehr einfache, steife und stabile Verbindung zwischen den Portalen und den in Längsrichtung ausgerichteten Rahmenstrukturen statt, indem die Ständerelemente jeweils Teil der Portale und Teil der umlaufenden, in Längsrichtung ausgerichteten und die Portale untereinander verbindenden Rahmenstrukturen sind. Den Ständerelementen kommt mithin eine Art Doppelfunktion hinsichtlich der Aussteifung des Kofferaufbaus zu. Anders ausgedrückt wird die Rahmenstruktur, die bei bekannten Kofferaufbauten durch die Verbindung der Stirnwand und der Rückwand über die Holmstrukturen und die Bodenstruktur bereitgestellt wird, multipliziert und mit einem deutlich geringeren Rastermaß bereitgestellt, wobei das Rastermaß nicht konstant sein muss.

Grundsätzlich wird es zur Vereinfachung der Konstruktion und damit zur Vereinfachung der Herstellung bevorzugt sein, wenn die Abstände benachbarter Portale untereinander in der Längsrichtung des Kofferaufbaus gesehen jeweils wenigstens im Wesentlichen gleiche Abstände aufweisen. Zwingend ist dies jedoch nicht. Es wird zudem zur Vereinfachung der Konstruktion und damit zur Vereinfachung der Herstellung bevorzugt sein, wenn alle Ständerelemente des Kofferaufbaus und/oder alle Balkenelemente des Kofferaufbaus einen Teil eines Portals bilden. Aber auch dies ist nicht zwingend.

Der besseren Verständlichkeit halber und zur Vermeidung unnötiger Wiederholungen wird nachfolgend der Kofferaufbau insbesondere für den Fall beschrieben, dass die Abstände bzw. das Raster der Portale in Längsrichtung untereinander konstant sind bzw. ist und dass die Ständerelemente und die Balkenelemente eines Kofferaufbaus stets Teil eines dieser Portale ist. Dennoch wird dies nicht als zwingend im Zusammenhang mit der Erfindung angesehen. Der Fachmann wird mithin jeweils die unterschiedlichen Ausgestaltungen des erfindungsgemäßen Kofferaufbaus erkennen, ohne dass diese immer jeweils im Einzelnen genannt werden müssen.

Bei einer ersten besonders bevorzugten Ausgestaltung des Kofferaufbaus definieren die Portale jeweils eine Portalebene, wobei die entsprechenden Portalebenen zueinander wenigstens im Wesentlichen parallel ausgerichtet sind. Dies führt zu einer sehr stabilen und steifen Ausgestaltung des Kofferaufbaus. Die Portale sind so entlang der Längsrichtung des Kofferaufbaus verteilt, dass sie parallel über die von ihnen definierten Portalebenen parallel zueinander angeordnet sind. Aus konstruktiver Sicht und aufgrund der bevorzugten mechanischen Eigenschaften des Kofferaufbaus ist es dabei besonders bevorzugt, wenn die Portalebenen senkrecht zur Längsrichtung des Kofferaufbaus ausgerichtet sind.

Für die Stabilität und Steifigkeit des Kofferaufbaus ist es zudem bevorzugt, wenn die Portale jeweils wenigstens im Wesentlichen U-förmig ausgebildet sind. Dabei ist das durch die Portale gebildete "U" nach unten offen oder steht das entsprechende "U" auf dem Kopf. Die U-Form lässt sich steif ausbilden, wobei das Portal durch die wenigstens im Wesentlichen parallelen Seitenwände und das wenigstens im Wesentlichen senkrecht dazu ausgerichtete Dach vorzugsweise eckig ausgebildet ist.

Die durch die Portale gebildeten, umlaufenden Rahmen sind besonders stabil, wenn jeweils die Ständerelemente und das Balkenelement jedes Portals jeweils wenigstens im Wesentlichen parallel zueinander ausgerichtet sind. Zudem können die Ständerelemente und das Balkenelement jedes Portals jeweils wenigstens im Wesentlichen quer zum Kofferaufbau ausgerichtet sein, um dessen Aufbau zu vereinfachen. Zur weiteren Vereinfachung der Konstruktion und Herstellung des Kofferaufbaus ist es zweckmäßig, wenn die Portalebenen jeweils parallel zu den Ständerelementen und dem Balkenelement des jeweiligen Portals sind. Alternativ oder zusätzlich können die Portalebenen durch die Portale so definiert sein, dass die zugehörigen Ständerelemente und das zugehörige Balkenelement von der Portalebene wenigstens im Wesentlichen der Länge nach geschnitten werden.

Untereinander sind die Portale wenigstens im Wesentlichen durch die beiden Holmstrukturen, die drei Wandpaneele und die Bodenstruktur verbunden, da dies einen einfachen aber stabilen Aufbau gewährleistet. Gleichwohl können die Portale aber auch durch andere Bauteile miteinander verbunden sein. Solche zusätzlichen Bauteile können beispielsweise Sockelscheuerleisten an den unteren Rändern der Seitenwände oder Ladungssicherungsprofile sein, die sich zwischen benachbarten Ständerelementen erstrecken und mit diesen dauerhaft oder lösbar verbunden sein können. Die zusätzliche Aussteifung über diese zusätzlichen Bauteile wird bevorzugt ausgenutzt. Allerdings sind diese zusätzlichen Bauteile für die Stabilität, Steifigkeit und Langlebigkeit des Kofferaufbaus bevorzugt nicht erforderlich.

Aufgrund der Portalstruktur des Kofferaufbaus kann zur Einsparung von Material, Gewicht und Kosten wenigstens eine der Seitenwände und/oder das Dach einschalig ausgebildet sein. Dies bedeutet insbesondere, dass bei der wenigstens einen Seitenwand und/oder dem Dach nicht eine innere Decklage und eine äußere Decklage vorgesehen sind, zwischen denen eine Kernlage aus geschäumtem Kunststoff angeordnet ist. Die innere Decklage und die äußere Decklage, die sich wenigstens im Wesentlichen über die gesamte Fläche der wenigstens einen Seitenwand und/oder des Dachs erstrecken würden, würden in diesem Fall zu einem zweischaligen Aufbau der wenigstens einen Seitenwand und/oder des Dachs führen. Bei der bevorzugten einschaligen Ausgestaltung der Seitenwand ist das einzige Wandpaneel der jeweiligen Seitenwand bevorzugt auf der Außenseite der Ständerelemente angeordnet. Analog ist bei einer einschaligen Ausgestaltung des Dachs das Wandpaneel des Dachs auf der Außenseite der Balkenelemente angeordnet. In beiden Fällen wird ein flächiger Abschluss an der entsprechenden Außenseite des Kofferaufbaus erreicht.

Alternativ oder zusätzlich können die Wandpaneele der Seitenwände jeweils zwischen wenigstens einigen der jeweiligen Ständerelemente von der dem Wandpaneel abgewandten Seite der Ständerelemente wenigstens abschnittsweise zugänglich sein. Dort, wo das Wandpaneel entsprechend zugänglich ist, kann entsprechend auf eine zweite, innere Schale der Seitenwand verzichtet werden. Dies führt zu einer einfacheren und kostengünstigeren Ausgestaltung der Seitenwand. Somit ist es weiter bevorzugt, wenn die wenigstens eine Seitenwand zwischen wenigstens einigen der jeweiligen Ständerelemente wenigstens überwiegend zugänglich ist. Alternativ oder zusätzlich kann vorgesehen sein, dass das Wandpaneel des Dachs jeweils zwischen wenigstens einigen der Balkenelemente von der dem Wandpaneel abgewandten Seite der Ständerelemente wenigstens abschnittsweise zugänglich ist. Auch in diesen Bereichen der Zugänglichkeit des Wandpaneels des Dachs wird somit auf eine zweite, innere Schale des Dachs verzichtet, was zu einer einfacheren und kostengünstigeren Ausgestaltung des Dachs beiträgt. Dies kommt insbesondere dann zum Tragen, wenn das Wandpaneel des Dachs zwischen den entsprechenden Balkenelementen wenigstens überwiegend zugänglich ist.

Unabhängig davon können auch wenigstens einige der Ständerelemente und/oder wenigstens einige der Balkenelemente von dem Laderaum aus zugänglich sein, und zwar wenigstens abschnittsweise. In diesen Abschnitten kann also darauf verzichtet werden, die entsprechenden Ständerelemente und/oder die entsprechenden Balkenelemente an den Innenseiten mit einem zweiten, inneren Wandpaneel als zweite Schale der Seitenwände bzw. des Dachs abzudecken. Folglich kann so Material eingespart und können so die Herstellungskosten gesenkt werden. Dies gilt umso mehr, wenn wenigstens alle Ständerelemente und/oder Balkenelemente vom Laderaum des Kofferaufbaus zugänglich sind und/oder wenn die wenigstens abschnittsweise vom Laderaum zugänglichen Ständerelemente und/oder Balkenelemente wenigstens überwiegend vom Laderaum des Kofferaufbaus zugänglich sind.

Um eine einschalige Ausgestaltung der wenigstens einen Seitenwand und/oder des Dachs ohne nachhaltige Schwächung des Kofferaufbaus realisieren zu können, bietet es sich an, wenn das Wandpaneel aus einem Verbundlaminat umfassend wenigstens zwei Metallschichten und wenigstens eine zwischen den wenigstens zwei Metallschichten vorgesehene Kunststoffschicht gebildet wird. Dabei spielt es grundsätzlich keine Rolle, ob das entsprechende Wandpaneel in einer Ebene der entsprechenden Schichten einteilig oder mehrteilig ausgebildet ist. Aus Kostengründen und den mechanischen Eigenschaften der Kunststoffschicht bietet es sich an, wenn die wenigstens eine Kunststoffschicht wenigstens im Wesentlichen aus einem thermoplastischen Kunststoff, vorzugsweise aus wenigstens einem Olefin, insbesondere wenigstens überwiegend aus Polypropylen (PP) gebildet ist. Alternativ oder zusätzlich ist es aus denselben Gründen zweckmäßig, wenn wenigstens eine Metallschicht aus Aluminium und/oder Stahl und/oder wenigstens eine Außenseite des Wandpaneels wenigstens im Wesentlichen aus einem Lack, insbesondere Klarlack, gebildet ist.

Um die Fertigung des Kofferaufbaus zu vereinfachen, weist das Wandpaneel wenigstens einer Seitenwand und/oder des Dachs eine Mehrzahl von nebeneinander angeordneten Paneelelementen auf. Das entsprechende Wandpaneel setzt sich folglich aus mehreren Paneelelementen zusammen. Dabei ist es fertigungstechnisch besonders zweckmäßig, wenn die Paneelelemente des entsprechenden Wandelements in Längsrichtung des Kofferaufbaus hintereinander angeordnet bzw. aneinandergereiht sind. So können die Paneelelemente einfach zu handhabende Größen aufweisen. Für die Verbindung der Paneelelemente untereinander bieten sich, insbesondere bei entsprechender Anordnung der Paneelelemente, Verbindungsbereiche an, die sich wenigstens im Wesentlichen quer zur jeweiligen Seitenwand und/oder dem Dach erstrecken und durch die beiden jeweils benachbarten Paneelelemente gebildet werden. Für eine einfache und dauerhafte Verbindung der Paneelelemente ist es weiter bevorzugt, wenn die Verbindungsbereiche der jeweils benachbarten Paneelelemente nach innen in Richtung des Laderaums vorstehen.

Die miteinander verbundenen Paneelelemente wenigstens eines Wandpaneels können in einfacher Weise an ihren jeweils benachbarten Rändern zur Innenseite des Wandelements umgebogen werden, um einfach Verbindungsbereiche zu schaffen, die eine dauerhafte und feste Verbindung zwischen den Paneelelementen sicherstellen. Dabei kann es fertigungstechnisch und aus Gründen der Steifigkeit bevorzugt sein, wenn die Ränder abgekantet oder rolliert werden. Eine schnelle und einfache Verbindung, die zugleich sehr dauerhaft ist, kann erhalten werden, wenn die umgebogenen, insbesondere abgekanteten oder rollierten, benachbarten Ränder der Paneelelemente miteinander verbunden, vorzugsweise verklebt, werden auch wenn dies bedarfsweise eher dem Abdichten als dem Verbinden dient. Alternativ oder zusätzlich zu einem Verkleben kommt auch ein formschlüssiges, kraftschlüssiges und/oder anderweitiges stoffschlüssiges Verbinden in Frage.

Erfindungsgemäss sind die Ständerelemente und/oder der Balkenelemente den Verbindungsbereichen der Paneelelemente der Seitenwände und/oder des Dachs zugeordnet, wobei diese Zuordnung auch nur teilweise erfolgen kann. Die Zuordnung der Ständerelemente zu den Verbindungsbereichen führt zu einer Stabilisierung der Verbindungen zwischen den Paneelelementen, die mithin langlebiger werden. Dies gilt in besonderem Maße, wenn die Ständerelemente und/oder die Balkenelemente wenigstens teilweise die Verbindungsbereiche der Paneelelemente der Seitenwände und/oder des Dachs überdeckend und/oder überbrückend angeordnet sind. Bei einer überdeckenden Anordnung der Ständerelemente sind diese entlang des Verbindungsbereichs angeordnet. Bei der überbrückenden Anordnung der Ständerelemente erstrecken sich die Ständerelemente seitlich über den Verbindungsbereich hinaus. Dabei ist der Übergang von einer überdeckenden zu einer überbrückenden Anordnung der Ständerelemente fließend, da auch die Grenzen des Verbindungsbereichs fließend sind.

Zur Unterstützung der Verbindungsbereiche kann es zweckmäßig sein, wenn die Ständerelemente und/oder die Balkenelemente wenigstens teilweise außerhalb der Verbindungsbereiche der Paneelelemente mit jeweils den über Verbindungsbereiche miteinander verbundenen Paneelelementen verbunden, insbesondere verklebt, sind. Die Verbindung zwischen den Paneelelementen erfolgt dann sowohl über die Verbindungsbereiche als auch über die Ständerelemente und/oder die Balkenelemente. Der Kofferaufbau kann so sehr robust ausgebildet werden.

Um die Ständerelemente und/oder die Balkenelemente in einfacher und effektiver Weise den Verbindungsbereichen zuordnen zu können, weisen die Ständerelemente und/oder die Balkenelemente jeweils eine Aufnahme zur wenigstens abschnittsweisen Aufnahme eines Verbindungsbereichs benachbarter Paneelelemente auf. So wird der Verbindungsbereich der Paneelelemente zudem entlastet. Dabei ist es zur Nutzung der Aufnahme besonders bevorzugt, wenn sich der jeweilige Verbindungsbereich der benachbarten Paneelelemente seitlich in Richtung des Laderaums erstreckt. Um eine feste Verbindung zwischen den Paneelelementen und den Ständerelementen und/oder Balkenelementen zu erreichen und die Verbindungsbereiche damit zu entlasten, ist es zweckmäßig, wenn die Ständerelemente und/oder die Balkenelemente mit Anlageflächen zu gegenüberliegenden Seiten der Verbindungsbereiche an den zugehörigen Paneelelementen anliegen. So wird eine breite und zuverlässige Anlage sowie Verbindung der Paneelelemente mit den Ständerelementen und/oder Balkenelementen erreicht. Diese Anlageflächen lassen sich zudem einfach und zweckmäßig zum Verkleben mit den Paneelelementen nutzen. Andere dauerhafte Verbindungen sind jedoch ebenfalls denkbar.

Um die Kosten des Kofferaufbaus zu senken, kann es sich anbieten, die Ständerelemente und/oder die Balkenelemente als Profile auszubilden. Dabei lassen sich beispielsweise Metallprofile einfach und kostengünstig fertigen. Alternativ oder zusätzlich können die Ständerelemente und/oder die Balkenelemente auch als Hohlprofile ausgebildet sein, um Gewicht und somit letztlich Kosten zu sparen. Wenn die Hohlprofile zudem als offene Hohlprofile ausgebildet werden, gilt dies umso mehr und es kann der Verbindungsbereich wenigstens abschnittsweise aufgenommen werden. Wenn die Ständerelemente und/oder die Balkenelemente, insbesondere wenigstens im Wesentlichen durchgängig, einen trapezförmigen und/oder omegaförmigen und/oder hutförmigen Querschnitt aufweisen, ist eine zweckmäßige Verbindung oder wenigstens Anlage an die benachbarten Paneelelemente möglich. Zudem führen solche Querschnitte zu einer hohen Steifigkeit.

Nachfolgend wird die Erfindung anhand einer lediglich ein Ausführungsbeispiel darstellenden Zeichnung näher erläutert. In der Zeichnung zeigt.
- Fig. 1: ein Nutzfahrzeug mit einem erfindungsgemäßen Kofferaufbau in einer perspektivischen Ansicht,
- Fig. 2: einen Abschnitt einer Seitenwand des Kofferaufbaus gemäß Fig. 1 in einer perspektivischen Ansicht,
- Fig. 3A-B: unterschiedliche Ständerelemente zur Bildung einer Seitenwand in einer perspektivischen Ansicht,
- Fig. 4: ein Paneelelement zur Bildung eines Wandpaneels gemäß Fig. 1 in einer perspektivischen Ansicht,
- Fig. 5: den Schichtaufbau eines Paneelelements der Seitenwand gemäß Fig. 2 in einem Querschnitt und
- Fig. 6: ein Detail der Seitenwand aus Fig. 2 in einer Schnittansicht,
- Fig. 7: Verbindungsbereiche zwischen einer Seitenwand und dem Dach des Kofferaufbaus in einer perspektivischen Ansicht,
- Fig. 8: ein Portal des Kofferaufbaus in einer Querschnittsansicht und
- Fig. 9: einen Abschnitt des Kofferaufbaus mit schematisch hervorgehobenen Portalen und Rahmenelementen in einer perspektivischen Ansicht.

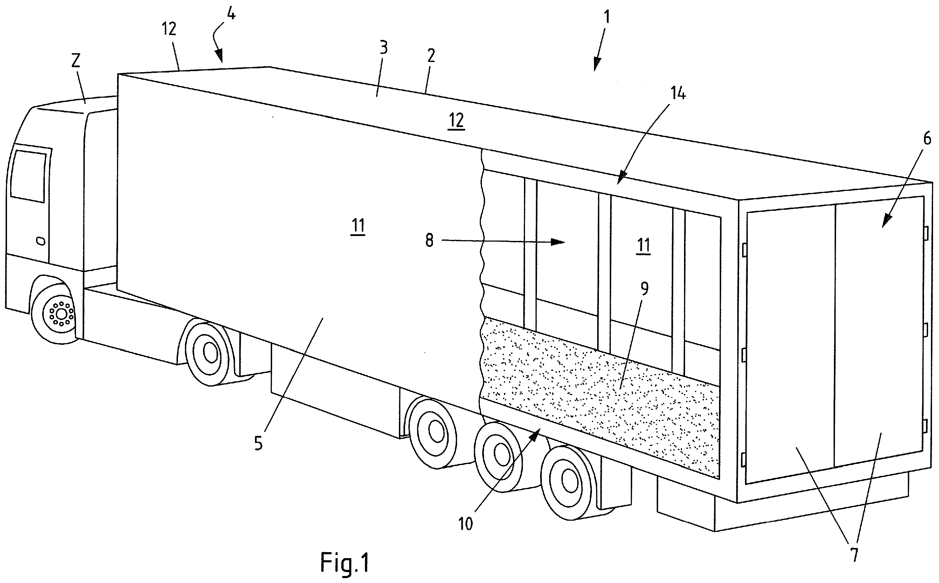

In der Fig. 1 ist ein Nutzfahrzeug 1 mit einem Kofferaufbau 2 in einer perspektivischen Ansicht dargestellt, das von einer Zugmaschine Z gezogen wird. Der Kofferaufbau 2 umfasst ein festes Dach 3, eine feste Stirnwand 4, zwei feste Seitenwände 5 und eine feste Rückwand 6, die im Wesentlichen durch zwei Flügeltüren 7 gebildet wird. Zudem umfasst der Aufbau einen Laderaum 8, der nach unten durch einen Ladeboden 9 begrenzt wird, der dem Aufstellen von Ladung dient. Dabei wird der Ladeboden 9 von einer Bodenstruktur 10 des Kofferaufbaus 2 getragen. Die Bodenstruktur 10 kann dabei insbesondere seitliche und in Längsrichtung des Nutzfahrzeugs ausgerichtete Bodenprofile aufweisen. Die Seitenwände 5 und das Dach 3 weisen an ihren vom Laderaum 8 wegweisenden Außenseiten Wandpaneele 11,12 auf, welche die Seitenwände 5 und das Dach 3 nach außen verschließen, so dass der Kofferaufbau 2 für den Trockentransport geeignet ist.

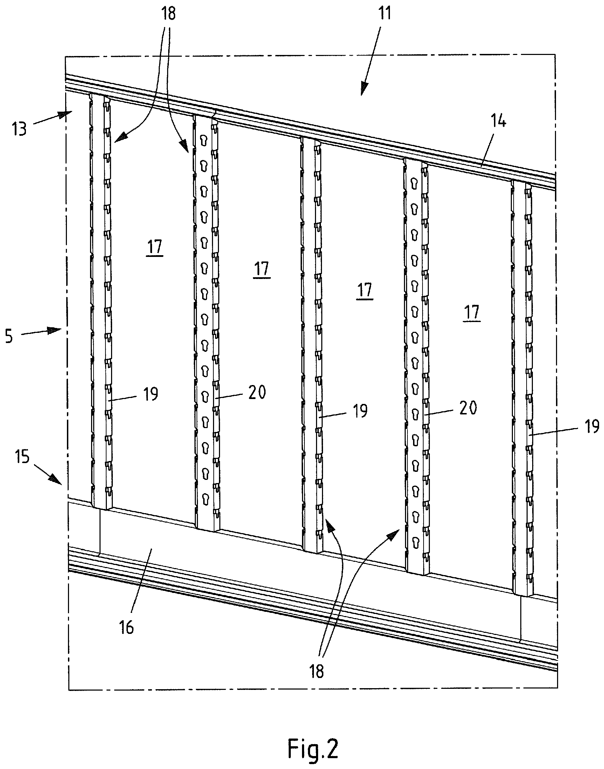

In der Fig. 2 ist ein Abschnitt einer Seitenwand 5 dargestellt, die bei dem dargestellten und insoweit bevorzugten Kofferaufbau 2 einschalig ausgebildet ist. Die einzige Schale der Seitenwand 5 wird durch das die Seitenwand verschließende Wandpaneel 11 gebildet. Die Seitenwand 5 und/oder das Wandpaneel 11 ist am oberen Rand 13 mit einem Holm bzw. einer Holmstruktur 14 verbunden, die sich entlang der Seitenwand 5 erstreckt und die Verbindung der Seitenwand 5 mit dem Dach 3 bereitstellt. Dabei kann die Holmstruktur 14 wahlweise als Teil der Seitenwand 5 oder als Teil des Dachs 3 angesehen werden. Jedenfalls ist die Holmstruktur 14 als verwindungssteifes Trägerelement mit einem hohen Flächenträgheitsmoment ausgebildet, um so der Aussteifung des Kofferaufbaus 2 zu dienen. Zudem kann die Holmstruktur 14 einteilig oder mehrteilig ausgebildet sein, insbesondere Innenprofile der Seitenwand 5 umfassen. Entsprechende Innenprofile können bedarfsweise mit der Innenseite einer Seitenwand 5 verbunden, insbesondere verklebt, sein. Dem unteren Rand 15 der Seitenwand 5 und/oder dem Wandpaneel 11 zugeordnet ist eine sogenannte Sockelscheuerleiste 16 vorgesehen, die die Seitenwand 5 vor Beschädigungen während des Be- und Entladens schützt. So stoßen bzw. scheuern Hubwagen, Rollwagen, Paletten etc. beim Be- und Entladen vornehmlich an die Sockelscheuerleiste 16, die diesen Belastungen besser widerstehen kann, als andere Bereiche der Seitenwand 5. Die Sockelscheuerleiste 16 ist dabei mit dem unteren Rand des jeweiligen Wandpaneels 11 verbunden, insbesondere verklebt. Über die Sockelscheuerleiste 16 ist das Wandpaneel 11 mit einer Bodenstruktur 10 bzw. Rahmenelement oder Bodenprofil der Bodenstruktur 10 verbunden, insbesondere verklebt. Anstelle einer Sockelscheuerleiste 16 kann aber auch ein anderes, insbesondere aufgeklebtes, Abschlussprofil bzw. Verbindungsprofil am unteren Rand des Wandpaneels 11 vorgesehen sein.

Das Wandpaneel 11 der Seitenwand 5 weist eine Reihe von in Längsrichtung des Kofferaufbaus 2 nebeneinander angeordneter Paneelelemente 17 auf, die sich wenigstens im Wesentlichen über die gesamte Breite oder Höhe des Wandpaneels 11 bzw. der Seitenwand 5 erstrecken. Die Längsrichtung des Kofferaufbaus 2 entspricht dabei vornehmlich der Fahrtrichtung des Kofferaufbaus 2, erstreckt sich also von vorne nach hinten oder umgekehrt durch den Kofferaufbau 2. Den Verbindungsbereichen 18 zweier aneinander angrenzender Paneelelemente 17 zugeordnet ist jeweils ein Ständerelement 19,20, das sich quer zur Längsrichtung des Wandpaneels 11 bzw. der Seitenwand 5 erstreckt. Bei der dargestellten und insoweit bevorzugten Seitenwand 5 erstrecken sich die Ständerelemente 19,20 wenigstens im Wesentlichen vertikal. Zudem erstrecken sich die Ständerelemente 19,20 über die gesamte Breite oder Höhe des Wandpeneels 11 bzw. der Seitenwand 5. Dadurch tragen die Ständerelemente 19,20 die Holmstruktur 14 bzw. das Dach 3, dessen Gewicht über die Holmstruktur 14 wenigstens teilweise an die Ständerelemente 19,20 abgeleitet wird. Die Gewichtskräfte des Dachs 3 werden von den Ständerelementen 19,20 in die den Ladeboden 9 tragende Bodenstruktur 10 des Kofferaufbaus 2 weitergeleitet.

Die einzelnen Paneelelemente 17 weisen eine Breite zwischen 550 mm und 650 mm auf. Mithin beträgt auch der Abstand jeweils benachbarter Ständerelemente 19,20 ebenfalls zwischen 550 mm und 650 mm. Es wären aber auch Breiten der Paneelelemente 17 zwischen beispielsweise 1100 mm und 1300 mm denkbar und zweckmäßig. Dann würde bedarfsweise der Abstand der jeweils benachbarten Ständerelemente 19,20 wenigstens etwa der Breite der Paneelelemente 17 entsprechen. Der Abstand wird dabei nicht von den einander zugeordneten Rändern der Ständerelemente 19,20, sondern von den Mittellinien der Ständerelemente 19,20 oder den Stellen der Ständerelemente 19,20 aus gemessen, die die Verbindungsbereiche 18 der zugeordneten Paneelelemente 17 überdecken. Bei der dargestellten und insoweit bevorzugten Seitenwand 5 sind zwei Arten von Ständerelementen 19,20 vorgesehen, die jeweils abwechselnd zueinander entlang der Längsrichtung des Kofferaufbaus 2 vorgesehen sind.

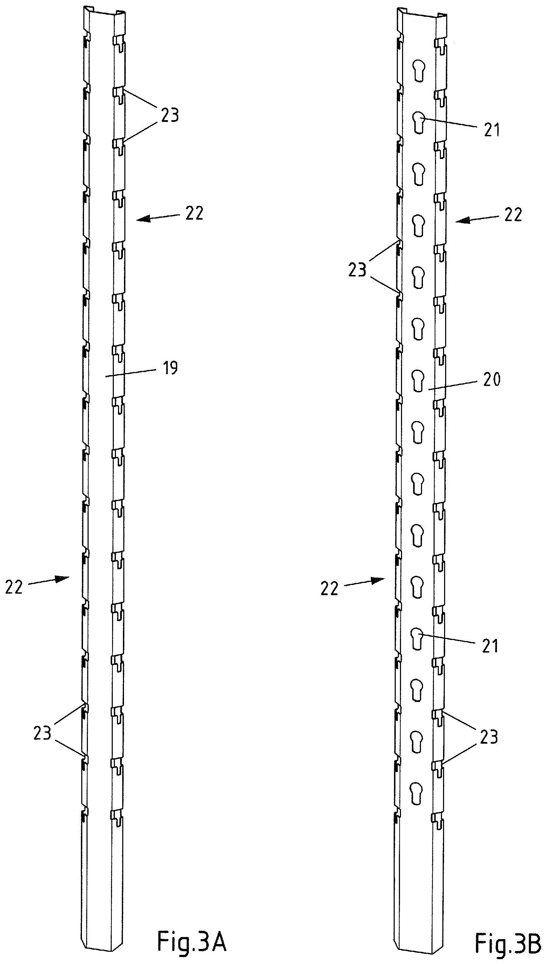

In der Fig. 3A-B sind die beiden Arten von Ständerelementen 19,20 separat dargestellt. Eine Art der Ständerelemente 19 ist schmaler als die andere Art der Ständerelemente 20. Die breitere Art der Ständerelemente 19,20 weist zudem an der von dem Wandpaneel 14 wegweisenden Seite über die Länge des Ständerelements 19,20 verteilt mehrere Ladungssicherungsöffnungen 21 zum Einhaken von Ladungssicherungsmitteln auf. Die breiteren Ständerelemente 20 sind ferner so angeordnet, dass sie ausgehend von der Stirnwand 4, jeweils etwa im Abstand von einer Europalette, also etwa zwischen 1150 mm und 1250 mm aufeinander folgen. Der Abstand benachbarter Ständerelemente 19,20 kann mithin bevorzugt zwischen 550 mm und 650 mm betragen. Bedarfsweise, insbesondere in Bezug auf die Länge von Europaletten kann der Abstand benachbarter Ständerelemente 19,20 aber auch zwischen 1100 mm und 1300 mm betragen. Insbesondere in Bezug auf die Breite von Europaletten in der Größenordnung von 800 mm kann der Abstand benachbarter Ständerelemente 19,20 aber auch zwischen 300 mm und 500 mm betragen. Den beiden Ständerelementen 19,20 ist gemein, dass sie seitliche, nach außen in Richtung des Wandpaneels abgeschrägte Seitenflächen 22 aufweisen, die bei einer Kollision mit der Ladung beim Be- und Entladen des Kofferaufbaus 2 die Ladung in Richtung des Laderaums 8 ableiten, um eine nachhaltige Beschädigung des entsprechenden Ständerelements 19,20 zu vermeiden. In den Seitenflächen 22 können über die Länge des Ständerelements 19,20 verteilt mehrere Ladungssicherungsöffnungen 23 zum Einhaken von Ladungssicherungsmitteln oder von Ladungssicherungsbalken vorgesehen sein. Grundsätzlich könnten anstelle von unterschiedlichen Arten von Ständerelementen 19,20 bei einer anderen Seitenwand 5 auch nur gleichartige Ständerelemente 19,20 vorgesehen sein.

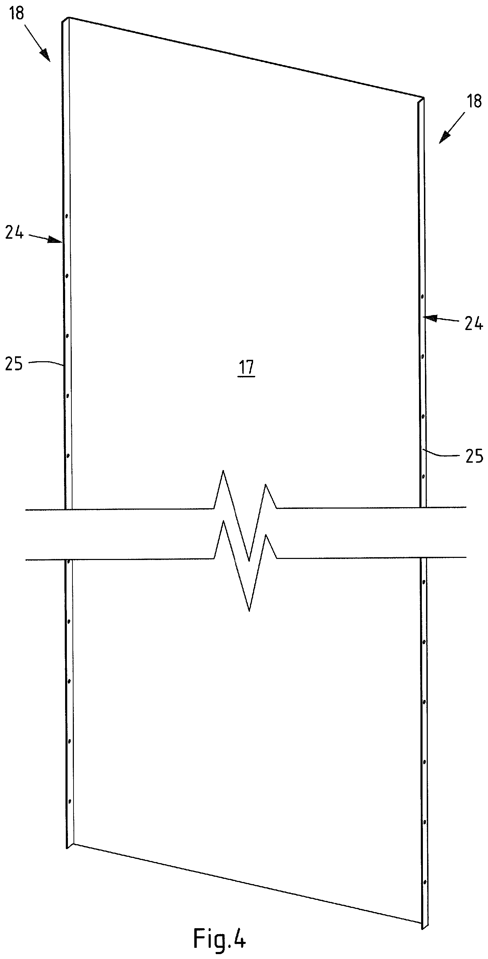

In der Fig. 4 ist ein Paneelelement 17 des Wandpaneels 11 der Seitenwand 5 aus Fig. 2 dargestellt. Die Paneelelemente 17 des Wandpaneels 11 sind gleichartig aufgebaut und weisen demnach jeweils dieselben Abmessungen auf, auch wenn dies nicht zwingend der Fall sein muss. Die Paneelelemente 17 sind in den Verbindungsbereichen 18 an ihren seitlichen Rändern 24 nach innen in Richtung des Laderaums 8 umgebogen. Die Ränder 24 weisen daher jeweils eine Verbindungsfläche 25 auf, die aneinander angrenzend und wenigstens im Wesentlichen parallel zueinander ausgerichtet sind. Die entsprechenden Verbindungsflächen 25 werden dann zur Bildung des Wandpaneels 14 miteinander verbunden, insbesondere verklebt. Die Paneelelemente 17 sind jeweils als ein mehrschichtiges Verbundlaminat 26 ausgebildet.

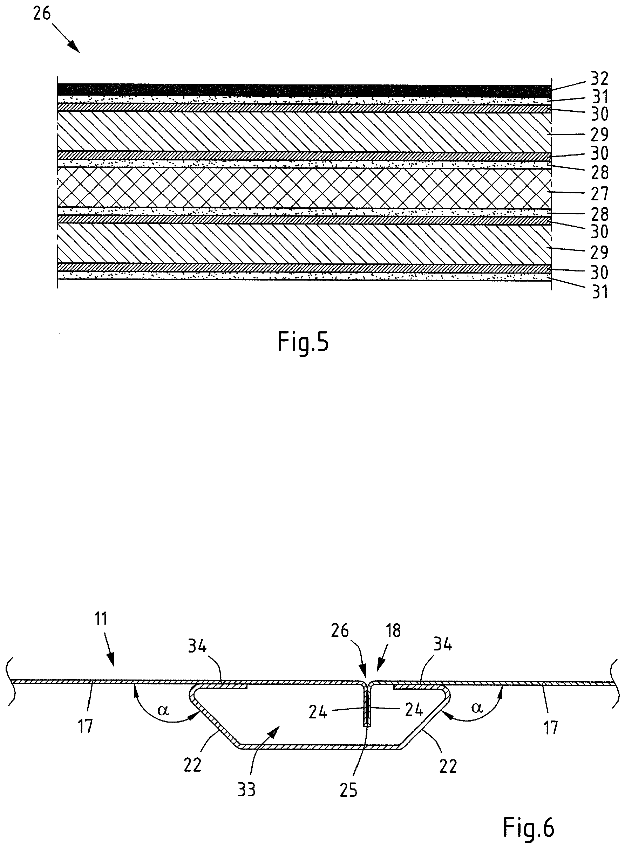

Der Aufbau des vorliegenden und insoweit bevorzugten Verbundlaminats 26 ist in der Fig. 5 exemplarisch dargestellt, wobei die Schichtdicken des Verbundlaminats nicht maßstabsgetreu wiedergegeben sind. Bei diesem Verbundlaminat 26 ist eine Kunststoffschicht 27 aus wenigstens im Wesentlichen Polypropylen (PP) vorgesehen, in dessen äußere Schichten ein Haftvermittler in Form von Maleinsäureanhydrid eingebracht ist. Die Kunststoffschicht 27 weist eine Dicke zwischen 0,5 mm und 3 mm, vorzugsweise zwischen 0,6 mm und 2 mm, insbesondere zwischen 0,8 mm und 1,2 mm auf. Zudem sind auf die Außenseiten der Kunststoffschicht 27 Klarlackschichten 28 einer Dicke von etwa 1 µm aufgebracht. An diese Klarlackschichten 28 schließen sich Metallschichten 29 einer Dicke zwischen 50 µm und 900 µm, vorzugsweise zwischen 100 µm und 600 µm, insbesondere zwischen 200 µm und 300 µm an, die jeweils an beiden Seiten mit einer Beschichtung, insbesondere Magnesium-Zink-Beschichtung oder Aluminium-Zink-Beschichtung 30 einer Dicke von zwischen 8 µm und 30 µm, vorzugsweise zwischen 9 µm und 20 µm, insbesondere zwischen 10 µm und 15 µm, versehen sind. Dabei ist die Metallschicht 29 bedarfsweise zunächst mit den Lack-, insbesondere Klarlackschichten 28, versehen, die dann über die Haftvermittlerschichten an die Kunststoffschicht 27 angebunden werden. Die äußeren Seiten der Metallschichten 29 sind wiederum mit einer Klarlackschicht 31 einer Dicke von etwa 1 µm überzogen. Die Außenseite des Paneelelements 17 bezogen auf den Laderaum 8 bzw. das Nutzfahrzeug 1 ist zudem mit einer Lackschicht 32, bedarfsweise Klarlackschicht, versehen, die eine Dicke zwischen 10 µm und 15 µm aufweist.

In der Fig. 6 ist ein Querschnitt der Seitenwand 5 im Bereich eines Ständerelements 20 und eines Verbindungsbereichs 18 zweier Paneelelemente 17 dargestellt. Die Paneelelemente 17 weisen angrenzend zueinander umgebogene Ränder 24 auf, die sich bei den dargestellten und insoweit bevorzugten Paeelelementen 17 wenigstens abschnittsweise senkrecht zu dem Wandpaneel 11 nach innen in Richtung des Laderaums 8 erstrecken. In diesen Abschnitten weisen die Ränder 24 der Paneelelemente 17 aneinandergrenzende Verbindungsflächen 25 auf, die über eine Klebeverbindung 39 miteinander verbunden, insbesondere verklebt sind, auch wenn die Klebeverbindung 39 bedarfsweise eher dem Abdichten des Spalts zwischen den Paneelelementen 17 dient. Alternativ oder zusätzlich können im Verbindungsbereich 18 wenigstens kraftschlüssige und/oder formschlüssige Verbindungen, beispielsweise Nietverbindungen, vorgesehen sein. Der entsprechende Verbindungsbereich 18 wird von dem zugeordneten Ständerelement 20 überdeckt und übergriffen. Das Ständerelement 20 weist dabei die Form eines einseitig offenen Hohlprofils auf, das in seinem Inneren eine Aufnahme 33 für wenigstens Teile des Verbindungsbereichs 18 bereithält. Das Ständerelement 20 weist dabei einen trapezförmigen Querschnitt mit zwei in Richtung des Wandpaneels 11 schräg nach außen geneigten Seiten 22 auf. Diese Seiten 22 verlaufen dabei in einem Winkel α von etwa 130° bis 150° in Bezug auf den sich seitlich anschließenden Bereich der Paneelelemente 17. Angrenzend zu den beiden dem Ständerelement 20 zugeordneten Paneelelementen 17 weist das Ständerelement 20 Anlageflächen 34 zur Anlage an die Paneelelemente 17 auf, wobei die Anlageflächen 34 vorliegend wenigstens im Wesentlichen parallel zueinander ausgerichtet und vorliegend auch wenigstens im Wesentlichen in einer gemeinsamen Ebene angeordnet sind. Mit diesen Anlageflächen 34 ist das Ständerelement 20 mit den angrenzenden Paneelelementen 17 verbunden, insbesondere verklebt.

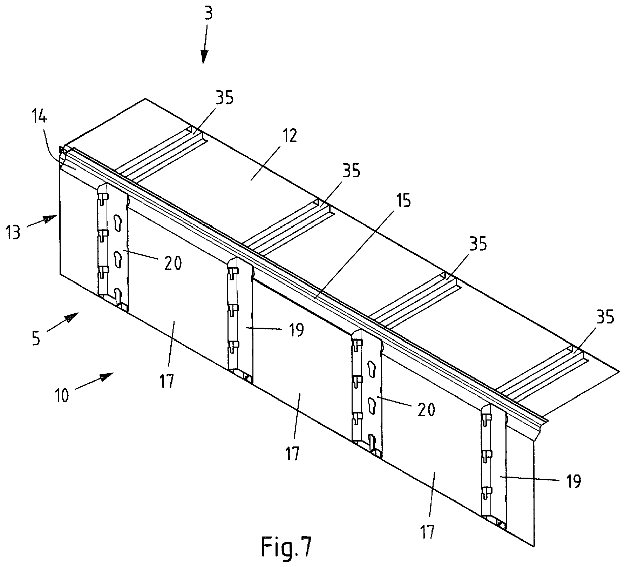

In der Fig. 7 ist der obere Rand 13 der Seitenwand 5, die Holmstruktur 14 und das Dach 3 des Kofferaufbaus 2 aus dem Laderaum 8 gesehen dargestellt. Das Dach 3 ist dabei analog zur Seitenwand 5 ausgebildet und umfasst ein Wandpaneel 12 sowie eine Reihe von Balkenelementen 35, die parallel zueinander und in Längsrichtung des Koffersaufbaus 2 voneinander beabstandet abgeordnet sind. Die Balkenelemente 35 erstrecken sich quer zum Dach 3 und von einer Holmstruktur 14 zur gegenüberliegenden Holmstruktur 14. Die Balkenelemente 35 sind zudem mit den beiden Holmstrukturen 14 verbunden. Anders als die Ständerelemente 19,20 weisen die Balkenelemente 35 des dargestellten und insoweit bevorzugten Dachs 3 keine Ladungssicherungsöffnungen zum Festlegen von Ladungssicherungsmitteln oder Ladungssicherungsprofilen auf.

Zudem kann das Wandpaneel 12 des Dachs 3 analog zum Wandpaneel 11 der Seitenwände 5 und der Fig. 6 aus einer Mehrzahl von in Längsrichtung des Kofferaufbaus 2 hintereinander angeordneter und sich wenigstens im Wesentlichen über die gesamte Breite des Dachs 3 erstreckender Paneelelemente 17 gebildet sein. Die Paneelelemente 17 des Dachs 3 können dabei die bereits beschriebenen Verbindungsbereiche 18 aufweisen, wobei die Verbindungsbereiche 18 des Dachs 3 den Balkenelemente 35 analog zu den Ständerelementen 19,20 der Fig. 6 zugeordnet sind. Auch die Balkenelemente 35 können dann einen wenigstens im Wesentlichen trapezförmigen Querschnitt mit seitlich nach außen abgeschrägten Seitenflächen aufweisen. Zudem können die Balkenelemente 35 angrenzend an die Paneelelemente 17 Anlageflächen aufweisen, mit denen die die Verbindungsbereiche 18 überbrückenden Balkenelemente 35 an den Paneelelementen 17 anliegen, und zwar auf jeweils gegenüberliegenden Seiten der Verbindungsbereiche 18. Dabei sind die Anlageflächen zudem mit dem Wandpaneel 12 des Dachs 3 verbunden, insbesondere verklebt. Bei dem dargestellten und insoweit bevorzugten Kofferaufbau weist das Dach 3 jedoch ein einziges durchgängiges Wandpaneel auf, das sich nicht aus einzelnen, miteinander verbundenen Paneelelementen zusammensetzt. Zudem sind die Balkenelemente 35 des dargestellten und insoweit bevorzugten Dachs 3 als Hutprofile ausgebildet aus Metall, insbesondere Stahl, ausgebildet.

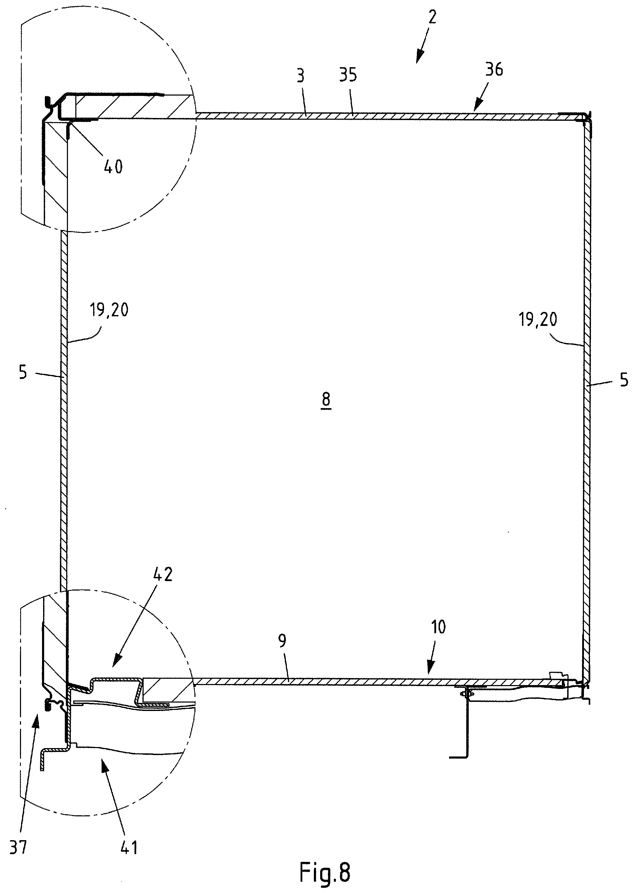

In der Fig. 8 ist der Kofferaufbau 2 in einem Querschnitt durch ein Portal 36 dargestellt. Das Portal 36 ist U-förmig ausgestaltet, wobei das Portal 36 rechtwinklig ausgebildet und nach unten geöffnet ist. Zudem umfasst das Portal 36 jeweils ein Ständerelement 19,20 der beiden gegenüberliegenden Seitenwände 5 und ein Balkenelement 35 des die beiden Seitenwände 5 verbindenden Dachs 3. Die beiden Ständerelemente 19,20 sind mit ihren oberen Enden mit der jeweils zugeordneten Holmstruktur 14 fest verbunden, während das Balkenelement 35 des Portals 36 mit gegenüberliegenden Seiten mit den beiden Holmstrukturen 14 verbunden ist. Bei dem dargestellten Ausführungsbeispiel ist die Holmstruktur 14 mehrteilig ausgebildet, und zwar aus unterschiedlichen, sich in Längsrichtung des Kofferaufbaus 2 erstreckende Profilen. Die einzelnen Profile können dabei bedarfsweise der Außenseite und/oder Innenseite des Kofferaufbaus 2 zugeordnet sein, wobei die Innenseite des Kofferaufbaus vorzugsweise dem Laderaum 8 zugewandt ist. Vorliegend ist zum oberen Abschluss der Wand 4,5 und/oder des Wandpaneels 11,12 ein Innenprofil 40 vorgesehen, das dem Laderaum 8, nicht aber der Außenseite des Kofferaufbaus 2 zugewandt ist.

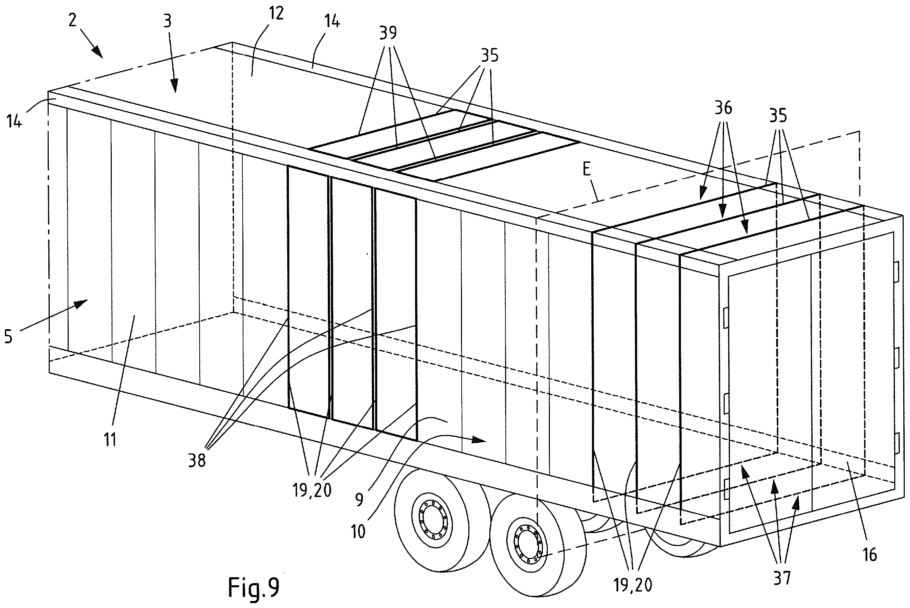

Die Ständerelemente 19,20 sind ferner mit ihren unteren Enden mit der Bodenstruktur 10 des Kofferaufbaus 2 fest verbunden. Die Bodenstruktur 10 verbindet dabei die beiden Ständerelemente 19,20 des Portals 36 miteinander. Auf diese Weise bilden das Portal 36 und die Bodenstruktur 10 ein umlaufendes Rahmenelement 37, das mithin den Kofferaufbau 2 aussteift. Die in der Fig. 9 dargestellten Portale 36 sind in analoger Weise in regelmäßigen Abständen in der Längsrichtung des Kofferaufbaus 2 vorgesehen. Die Bodenstruktur 10 weist bei dem dargestellten Ausführungsbeispiel eine mehrteilig ausgebildete seitliche Bodenprofilstruktur 41 mit einer Mehrzahl von separaten Profilen auf. Die Profile erstrecken sich in der Längsrichtung des Kofferaufbaus 2und sind untereinander verbunden. Dabei können die einzelnen Profile bedarfsweise der Außenseite und/oder Innenseite des Kofferaufbaus 2 zugeordnet sein, wobei die Innenseite des Kofferaufbaus 2 vorzugsweise dem Laderaum 8 zugewandt ist. Vorliegend ist unter anderem eines von mehreren umlaufend angeordneten Bodenrahmenprofilen 42 vorgesehen, die zusammen einen umlaufenden Bodenrahmen bilden, der den eigentlichen Ladeboden trägt.

In der Fig. 9 ist der Kofferaufbau 2 schematisch dargestellt, wobei die Portale 36 zeichnerisch hervorgehoben worden sind. Die Portale 36 definieren jeweils eine Portalebene E, wobei die Portalebenen E jeweils parallel zueinander und quer zum Kofferaufbau 2 ausgerichtet sind. Die Portale 36 definieren beim dargestellten und insoweit bevorzugten Kofferaufbau die Portalebenen E so, dass die Portalebenen E die zugehörigen Ständerelemente 19,20 und Balkenelemente 35 schneiden. Mithin existiert bei den Portalen 36 nicht eine einzige Portalebene E, sondern die Portale 36 definieren bedarfsweise jeweils wenigstens eine von mehreren möglichen Portalebenen E. Bei dem dargestellten und insoweit bevorzugten Kofferaufbau 2 sind das Balkenelement 35 und die Ständerelemente 19,20 jedes Portals 36 stets parallel zueinander und wenigstens im Wesentlichen gleich weit beabstandet von der Stirnwand 4 und/oder der Rückwand 6.

Die Portale 36 sind untereinander wenigstens im Wesentlichen durch die beiden Holmstrukturen 14, die drei Wandpaneele 11,12, die Bodenstruktur 10 und die Sockelscheuerleisten 16 der Seitenwände 5 miteinander verbunden. Dabei bildet jede Holmstruktur 14 zusammen mit der Bodenstruktur 10 und den Ständerelementen 19,20 jeweils einer Seitenwand 5 eine Reihe von umlaufenden, hintereinander angeordneten Rahmenelementen 38. Die Rahmenelemente 38 sind dabei rechteckig ausgebildet und in einer gemeinsamen Ebene mit der jeweiligen Seitenwand 5 vorgesehen. Weitere Rahmenelemente 39 werden in einer gemeinsamen Ebene mit dem Dach 3 gebildet. Diese Rahmenelemente 39 umfassen jeweils die beiden Holmstrukturen 14 und zwei benachbarte Balkenelemente 35 und erstrecken sich nacheinander in der Längsrichtung des Kofferaufbaus 2.

### Bezugszeichenliste

- 1: Nutzfahrzeug
- 2: Kofferaufbau
- 3: Dach
- 4: Stirnwand
- 5: Seitenwand
- 6: Rückwand
- 7: Flügeltür
- 8: Laderaum
- 9: Ladeboden
- 10: Bodenstruktur
- 11,12: Wandpaneel
- 13: oberen Rand
- 14: Holmstruktur
- 15: unterer Rand
- 16: Sockelscheuerleiste
- 17: Paneelelement
- 18: Verbindungsbereich
- 19,20: Ständerelement
- 21: Ladungssicherungsöffnung
- 22: Seitenfläche
- 23: Ladungssicherungsöffnung
- 24: Rand
- 25: Verbindungsflächen
- 26: Verbundlaminat
- 27: Kunststoffschicht
- 28: Klarlackschicht
- 29: Metallschicht
- 30: Aluminium-Zink-Beschichtung
- 31: Klarlackschicht
- 32: Lackschicht
- 33: Aufnahme
- 34: Anlagefläche
- 35: Balkenelement
- 36: Portal
- 37-39: Rahmenelement
- 40: Innenprofil
- 41: Bodenprofilstruktur
- 42: Bodenrahmenprofil
- E: Portalebene

## Patentansprüche

1. Kofferaufbau (2) eines Nutzfahrzeugs (1), insbesondere Lastkraftwagens, Anhängers oder Sattelaufliegers, mit zwei Seitenwänden (5), einem Dach (3), einer Stirnwand (4) und einer Rückwand (6), wobei die Seitenwände (5) jeweils in einem oberen Randbereich (13) über eine sich in Längsrichtung des Kofferaufbaus (2) erstreckende Holmstruktur (14) mit dem Dach (3) und verbunden sind, wobei die Seitenwände (5) jeweils in einem unteren Randbereich (15) mit einer Bodenstruktur (10) des Kofferaufbaus (2) verbunden sind, wobei die Seitenwände (5) jeweils ein die Seitenwand (5) wenigstens im Wesentlichen verschließendes Wandpaneel (11) und zur Aussteifung der Seitenwände (5) mehrere wenigstens im Wesentlichen parallel zueinander und beabstandet voneinander angeordnete Ständerelemente (19,20) aufweisen, wobei sich die Ständerelemente (19,20) jeweils wenigstens von der Bodenstruktur (10) bis zu der der jeweiligen Seitenwand (5) zugeordneten Holmstruktur (14) erstrecken, wobei das Dach (3) ein das Dach (3) wenigstens im Wesentlichen verschließendes Wandpaneel (12) und zur Aussteifung des Dachs (3) mehrere wenigstens im Wesentlichen parallel zueinander und beabstandet voneinander angeordnete Balkenelemente (35) aufweist, wobei sich die Balkenelemente (35) jeweils von einer Holmstruktur (14) zur gegenüberliegenden Holmstruktur (14) erstrecken und wobei in Längsrichtung des Kofferaufbaus (2) zwischen der Stirnwand (4) und der Rückwand (6) mehrere voneinander beabstandete und wenigstens im Wesentlichen zueinander parallele Portale (36) umfassend jeweils ein Ständerelement (19,20) jeder Seitenwand (5) und ein Balkenelement (35) des Dachs (3) vorgesehen sind **dadurch gekennzeichnet, dass** die Wandpaneele (11,12) der Seitenwände (5) und/oder des Dachs (3) jeweils eine Mehrzahl von nebeneinander angeordneten Paneelelementen (17) aufweisen, dass die Paneelelemente (17) sich wenigstens im Wesentlichen quer zur jeweiligen Seitenwand (5) und/oder dem Dach (3) erstreckende Verbindungsbereiche (18) bilden und dass die Ständerelemente (19,20) und/oder die Balkenelemente (35) wenigstens teilweise den Verbindungsbereichen (18) der Paneelelemente (17) der Seitenwände (5) und/oder des Dachs (3) zugeordnet sind.

2. Kofferaufbau nach Anspruch 1,
**dadurch gekennzeichnet, dass** die Portale (36) jeweils eine Portalebene (E) definieren und dass die Portalebenen (E) zueinander wenigstens im Wesentlichen parallel ausgerichtet sind.

3. Kofferaufbau nach Anspruch 1 oder 2,
**dadurch gekennzeichnet, dass** die Portale (36) jeweils wenigstens im Wesentlichen die Form eines auf dem Kopf stehenden U aufweisen.

4. Kofferaufbau nach einem der Ansprüche 1 bis 3,
**dadurch gekennzeichnet, dass** die Portalebenen (E), die Ständerelemente (19,20) und das Balkenelement (35) jedes Portals (36) wenigstens im Wesentlichen parallel zueinander und/oder zur zugehörigen Portalebene (36) ausgerichtet sind.

5. Kofferaufbau nach einem der Ansprüche 1 bis 4,
**dadurch gekennzeichnet, dass** die Portale (36) untereinander wenigstens im Wesentlichen durch die beiden Holmstrukturen (14), die drei Wandpaneele (11,12) und die Bodenstruktur (10), sowie vorzugsweise zwei Sockelscheuerleisten (16), miteinander verbunden sind.

6. Kofferaufbau nach einem der Ansprüche 1 bis 5,
**dadurch gekennzeichnet, dass** die Seitenwände (5) und/oder das Dach (3) einschalig ausgebildet sind/ist und dass, vorzugsweise, das einzige Wandpaneel (11) der jeweiligen Seitenwand (5) auf der Außenseite der Ständerelemente (19,20) und/oder das einzige Wandpaneel (12) des Dachs (3) auf der Außenseite der Balkenelemente (35) angeordnet ist.

7. Kofferaufbau nach einem der Ansprüche 1 bis 6,
**dadurch gekennzeichnet, dass** die Wandpaneele (11) der Seitenwände (5) jeweils zwischen den jeweiligen Ständerelementen (18,19) von der dem Wandpaneel (11) abgewandten Seite der Ständerelemente (19,20) wenigstens abschnittsweise, insbesondere überwiegend, zugänglich ist und/oder dass das Wandpaneel (12) des Dachs jeweils zwischen den Balkenelementen (35) von der dem Wandpaneel (12) abgewandten Seite der Balkenelemente (35) wenigstens abschnittsweise, insbesondere überwiegend, zugänglich ist.

8. Kofferaufbau nach einem der Ansprüche 1 bis 7,
**dadurch gekennzeichnet, dass** die Ständerelemente (19,20) und/oder die Balkenelemente (35) wenigstens überwiegend vom Laderaum (8) des Kofferaufbaus (2) zugänglich sind.

9. Kofferaufbau nach einem der Ansprüche 1 bis 8,
**dadurch gekennzeichnet, dass** das Wandpaneel (1,12) aus einem Verbundlaminat (26) umfassend wenigstens zwei Metallschichten (29) und wenigstens eine zwischen den wenigstens zwei Metallschichten (29) vorgesehene Kunststoffschicht (27) gebildet wird und dass, vorzugsweise, die wenigstens eine Kunststoffschicht (27) wenigstens im Wesentlichen aus einem thermoplastischen Kunststoff, vorzugsweise aus wenigstens einem Olefin, insbesondere wenigstens überwiegend aus Polypropylen (PP), und/oder wenigstens eine Metallschicht (29) aus Aluminium und/oder Stahl und/oder wenigstens eine Außenseite des Wandpaneels (11) wenigstens im Wesentlichen aus einem Klarlack (32) gebildet ist.

10. Kofferaufbau nach Anspruch 1,
**dadurch gekennzeichnet, dass** die Paneelelemente (17) sich wenigstens im Wesentlichen quer zur jeweiligen Seitenwand (5) und/oder dem Dach (3) erstreckende, nach innen in Richtung des Laderaums (8) vorstehende Verbindungsbereiche (18) bilden.

11. Kofferaufbau nach Anspruch 10,
**dadurch gekennzeichnet, dass** die miteinander verbundenen Paneelelemente (17) an ihren jeweils benachbarten Rändern (24) zur Innenseite des Wandelements (11) umgebogen, insbesondere abgekantet oder rolliert, sind und dass, vorzugsweise, die umgebogenen, insbesondere abgekanteten oder rollierten, benachbarten Ränder (24) der Paneelelemente (17) jeweils miteinander verbunden, insbesondere verklebt, sind.

12. Kofferaufbau nach Anspruch 1, 10 oder 11,
**dadurch gekennzeichnet, dass** die Ständerelemente (19,20) und/oder die Balkenelemente (35) wenigstens teilweise die Verbindungsbereiche (18) der Paneelelemente (17) der Seitenwände (5) und/oder des Dachs (3) überdeckend und/oder überbrückend angeordnet sind.

13. Kofferaufbau nach Anspruch 12,
**dadurch gekennzeichnet, dass** die Ständerelemente (19,20) und/oder die Balkenelemente (35) wenigstens teilweise außerhalb der Verbindungsbereiche (18) der Paneelelemente (17) mit jeweils den über Verbindungsbereiche (18) miteinander verbundenen Paneelelementen (17) verbunden, insbesondere verklebt, sind.

14. Kofferaufbau nach Anspruch 12 oder 13,
**dadurch gekennzeichnet, dass** die Ständerelemente (19,20) und/oder die Balkenelemente (35) jeweils eine Aufnahme (33) zur wenigstens abschnittsweisen Aufnahme eines, insbesondere sich seitlich in Richtung des Laderaums (8) erstreckenden, Verbindungsbereichs (18) benachbarter Paneelelemente (17) aufweisen und dass, vorzugsweise, die Ständerelemente (19,20) und/oder die Balkenelemente (35) mit Anlageflächen (34) zu gegenüberliegenden Seiten der Verbindungsbereiche (18) an den zugehörigen Paneelelementen (17) anliegen, insbesondere an den zugehörigen Paneelelementen (17) verklebt sind.

15. Kofferaufbau nach einem der Ansprüche 1 bis 14,
**dadurch gekennzeichnet, dass** die Ständerelemente (19,20) und/oder die Balkenelemente (35) als Profile, vorzugsweise Metallprofile, ausgebildet sind und/oder dass die Ständerelemente (19,20) und/oder die Balkenelemente (35) als, insbesondere offene, Hohlprofile ausgebildet sind und/oder dass die Ständerelemente (19,20) und/oder die Balkenelemente (35), insbesondere wenigstens im Wesentlichen durchgängig, einen trapezförmigen und/oder omegaförmigen und/oder hutförmigen Querschnitt aufweisen.

## Claims

1. Box body (2) of a commercial vehicle (1), in particular a heavy goods vehicle, trailer or semi-trailer, having two side walls (5), a roof (3), a front wall (4) and a rear wall (6), wherein the side walls (5) are each connected to the roof (3) in an upper edge region (13) via a bar structure (14) extending in the longitudinal direction of the box body (2), wherein the side walls (5) are each connected to a floor structure (10) of the box body (2) in a lower edge region (15), wherein the side walls (5) each have a wall panel (11) at least substantially sealing the side wall (5) and, for stiffening the side walls (5), a plurality of upright elements (19, 20) arranged at least substantially parallel to one another and spaced apart from one another, wherein the upright elements (19, 20) each extend at least from the floor structure (10) to the bar structure (14) assigned to the respective side wall (5), wherein the roof (3) has a wall panel (12) at least substantially sealing the roof (3) and, for stiffening the roof (3), a plurality of beam elements (35) arranged at least substantially parallel to one another and spaced apart from one another, wherein the beam elements (35) each extend from one bar structure (14) to the opposing bar structure (14) and wherein a plurality of portals (36) spaced apart from one another and at least substantially parallel to one another and each comprising an upright element (19, 20) of each side wall (5) and a beam element (35) of the roof (3) are provided in the longitudinal direction of the box body (2) between the front wall (4) and the rear wall (6),
**characterised in that**
the wall panels (11, 12) of the side walls (5) and/or of the roof (3) each have a plurality of panel elements (17) arranged next to one another, **in that** the panel elements (17) form connecting regions (18) extending at least substantially transverse to the respective side wall (5) and/or to the roof (3) and **in that** the upright elements (19, 20) and/or the beam elements (35) are assigned at least partially to the connecting regions (18) of the panel elements (17) of the side walls (5) and/or of the roof (3).

2. Box body according to claim 1, **characterised in that** the portals (36) each define a portal plane (E) and **in that** the portal planes (E) are aligned at least substantially parallel to one another.

3. Box body according to claim 1 or 2, **characterised in that** the portals (36) each have at least substantially the shape of an upside down U.

4. Box body according to any one of claims 1 to 3, **characterised in that** the portal planes (E), the upright elements (19, 20) and the beam element (35) of each portal (36) are aligned at least substantially parallel to one another and/or to the assigned portal plane (36).

5. Box body according to any one of claims 1 to 4, **characterised in that** the portals (36) are connected to one another at least substantially by the two bar structures (14), the three wall panels (11, 12) and the floor structure (10) and preferably two base skirting boards (16).

6. Box body according to any one of claims 1 to 5, **characterised in that** the side walls (5) and/or the roof (3) is/are formed in a monocoque manner and **in that** preferably the single wall panel (11) of the respective side wall (5) is arranged on the outer side of the upright elements (19, 20) and/or the single wall panel (12) of the roof (3) is arranged on the outer side of the beam elements (35).

7. Box body according to any one of claims 1 to 6, **characterised in that** the wall panels (11) of the side walls (5) are, at least in sections, in particular predominantly, each accessible between the respective upright elements (18, 19) from the side of the upright elements (19, 20) facing away from the wall panel (11) and/or **in that** the wall panel (12) of the roof is, at least in sections, in particular predominantly, in each case accessible between the beam elements (35) from the side of the beam elements (35) facing away from the wall panel (12).

8. Box body according to any one of claims 1 to 7, **characterised in that** the upright elements (19, 20) and/or the beam elements (35) are at least predominantly accessible from the loading space (8) of the box body (2).

9. Box body according to any one of claims 1 to 8, **characterised in that** the wall panel (1, 12) is formed of a composite laminate (26) comprising at least two metal layers (29) and at least one plastic layer (27) provided between the at least two metal layers (29) and **in that** preferably the at least one plastic layer (27) is formed at least substantially of a thermoplastic, preferably of at least one olefin, in particular at least predominantly of polypropylene (PP) and/or at least one metal layer (29) of aluminium and/or steel and/or at least one outer side of the wall panel (11) is formed at least substantially of a clear lacquer (32).

10. Box body according to claim 1, **characterised in that** the panel elements (17) form connecting regions (18) which extend at least substantially transverse to the respective side wall (5) and/or to the roof (3) and protrude inwards in the direction of the loading space (8).

11. Box body according to claim 10, **characterised in that** the panel elements (17) connected together are bent, in particular chamfered or rolled, at their respectively adjacent edges (24) towards the inner side of the wall element (11) and **in that** preferably the bent, in particular chamfered or rolled, adjacent edges (24) of the panel elements (17) are each connected, in particular adhered, together.

12. Box body according to claim 1, 10 or 11, **characterised in that** the upright elements (19, 20) and/or the beam elements (35) are arranged covering and/or spanning at least partially the connecting regions (18) of the panel elements (17) of the side walls (5) and/or of the roof (3).

13. Box body according to claim 12, **characterised in that** the upright elements (19, 20) and/or the beam elements (35) are each connected, in particular adhered, at least partially outside of the connecting regions (18) of the panel elements (17) with the panel elements (17) connected together via connecting regions (18).

14. Box body according to claim 12 or 13, **characterised in that** the upright elements (19, 20) and/or the beam elements (35) each have a receptacle (33) to, at least in sections, receive a connecting region (18) of adjacent panel elements (17) extending in particular laterally in the direction of the loading space (8) and **in that** preferably the upright elements (19, 20) and/or the beam elements (35) abut against the associated panel elements (17) with contact surfaces (34) at opposing sides of the connecting regions (18), in particular are adhered to the associated panel elements (17).

15. Box body according to any one of claims 1 to 14, **characterised in that** the upright elements (19, 20) and/or the beam elements (35) are formed as profiles, preferably metal profiles, and/or **in that** the upright elements (19, 20) and/or the beam elements (35) are formed as, in particular open, hollow profiles and/or **in that** the upright elements (19, 20) and/or the beam elements (35) have, in particular at least substantially continuously, a trapezoidal and/or omega-shaped and/or hat-shaped cross-section.

## Revendications

1. Ensemble de coffre (2) d'un véhicule utilitaire (1), notamment un camion, une remorque ou une semi-remorque, avec deux parois latérales (5), un toit (3), une paroi avant (4) et une paroi arrière (6), les parois latérales(5) étant respectivement reliées, dans une zone marginale supérieure (13), au toit (3) par l'intermédiaire d'une structure de type longeron (14) s'étendant en direction longitudinale de l'ensemble de coffre (2), les parois latérales (5) étant respectivement reliées, dans une zone marginale inférieure (15), à une structure de plancher (10) de l'ensemble de coffre (2), les parois latérales (5) présentant respectivement un panneau mural (11) refermant au moins essentiellement la paroi latérale (5) et plusieurs éléments de support (19, 20) agencés essentiellement parallèlement les uns par rapport aux autres et espacés les uns des autres pour rigidifier les parois latérales (5), les éléments de support (19, 20) s'étendant respectivement au moins de la structure de plancher (10) jusqu'à la structure de type longeron (14) associée à la paroi latérale (5) respective, le toit (3) présentant un panneau mural (12) refermant au moins essentiellement le toit (3) et plusieurs éléments de type montant (35) agencés essentiellement parallèlement les uns par rapport aux autres et espacés les uns des autres pour rigidifier le toit (3), les éléments de type montant (35) s'étendant respectivement d'une structure de type longeron (14) vers la structure de type longeron (14) opposée, et, plusieurs portails (36), espacés les uns des autres et au moins essentiellement parallèles les uns aux autres, comportant respectivement un élément de support (19, 20) de chaque paroi latérale (5) et un élément de type montant (35) du toit (3) étant prévus en direction longitudinale de l'ensemble de coffre (2), entre la paroi avant (4) et la paroi arrière (6),
**caractérisé en ce que**
les panneaux muraux (11, 12) de la paroi latérale (5) et/ou du toit (3) présentent respectivement plusieurs éléments de panneaux (17) agencés juxtaposés, **en ce que** les éléments de panneaux (17) forment, au moins essentiellement transversalement par rapport à la paroi latérale (5) respective et/ou au toit (3), des zones de raccord (18) et **en ce que** les éléments de support (19, 20) et/ou les éléments de type montant (35) sont associés, au moins partiellement, aux zones de raccord (18) des éléments de panneaux (17) des parois latérales (5) et/ou du toit (3).

2. Ensemble de coffre selon la revendication 1,
**caractérisé en ce que**
les portails (36) définissent respectivement un plan de portail (E) et **en ce que** les plans de portail (E) sont orientés au moins essentiellement parallèlement les uns par rapport aux autres.

3. Ensemble de coffre selon la revendication 1 ou 2,
**caractérisé en ce que**
les portails (36) présentent respectivement au moins essentiellement la forme d'un U inversé.

4. Ensemble de coffre selon l'une des revendications 1 à 3,
**caractérisé en ce que**
les plans de portail (E), les éléments de support (19, 20) et l'élément de type montant (35) de chaque portail (36) sont orientés au moins essentiellement parallèlement les uns par rapport aux autres et/ou par rapport au plan de portail (36) associé.

5. Ensemble de coffre selon l'une des revendications 1 à 4,
**caractérisé en ce que**
les portails (36) sont reliés entre eux au moins essentiellement par les deux structures de type longeron (14), les trois panneaux muraux (11, 12) et la structure de plancher (10), et, de préférence, par deux plinthes de socle (16).

6. Ensemble de coffre selon l'une des revendications 1 à 5,
**caractérisé en ce que**
les parois latérales (5) et/ou le toit (3) sont/est conçu(s) monocouche(s) et **en ce que**, de préférence, l'unique panneau mural (11) de la paroi latérale (5) respective est agencée sur le côté extérieur des éléments de support (19, 20) et/ou l'unique panneau mural (12) du toit (3) est agencé sur le côté extérieur des éléments de type montant (35).

7. Ensemble de coffre selon l'une des revendications 1 à 6,
**caractérisé en ce que**
les panneaux muraux (11) de la paroi latérale (5) sont accessible, au moins partiellement, notamment en majeure partie, respectivement entre les éléments de support (18, 19) respectifs, depuis le côté des éléments de support (18, 19) opposé au panneau mural (11) et/ou **en ce que** le panneau mural (12) du toit (3) est accessible, au moins partiellement, notamment en majeure partie, respectivement entre les éléments de type montant (35), depuis le côté des éléments de type montant (35) opposé au panneau mural (12).

8. Ensemble de coffre selon l'une des revendications 1 à 7,
**caractérisé en ce que**
les éléments de support (19, 20) et/ou les éléments de type montant (35) sont accessibles, au moins en majorité, depuis l'espace de chargement (8) de l'ensemble de coffre (2).

9. Ensemble de coffre selon l'une des revendications 1 à 8,
**caractérisé en ce que**
le panneau mural (1,12) est formé par un stratifié composite (26) comportant au moins deux couches métalliques (29) et au moins un couche de matière plastique (27) prévue entre les au moins deux couches métalliques (29) et **en ce que**, de préférence, la au moins une couche de matière plastique (27) est formée, au moins essentiellement, à partir d'une matière synthétique thermoplastique, de préférence à partir d'au moins une oléfine, notamment, au moins en majeure partie, à partir de polypropylène (PP), et/ou au moins une couche métallique (29) est formée à partir d'aluminium et/ou d'acier et/ou au moins un côté extérieur du panneau mural (11) est formé, au moins essentiellement, à partir d'un vernis transparent (32).

10. Ensemble de coffre selon la revendication 1,
**caractérisé en ce que**
les éléments de panneau (17), s'étendant, au moins essentiellement, transversalement par rapport à la paroi latérale (5) respective et/ou au toit (3), faisant saillie vers l'intérieur en direction de l'espace de chargement (8), forment des zones de raccord (18).

11. Ensemble de coffre selon la revendication 10,
**caractérisé en ce que**
les éléments de panneau (17) reliés entre eux sont repliés, notamment chanfreinés ou roulés au niveau de leurs bords (24) respectivement adjacents vers l'intérieur de l'élément de paroi (11) et **en ce que**, de préférence, les bords (24) adjacents repliés, notamment chanfreinés ou roulés, des éléments de panneau (17) sont respectivement reliés entre eux, notamment collés.

12. Ensemble de coffre selon la revendication 1, 10 ou 11,
**caractérisé en ce que**
les éléments de support (19, 20) et/ou les éléments de type montant (35) sont agencés de manière à recouvrir et/ou en chevauchement, au moins partiellement, par rapport aux zones de raccord (18) des éléments de panneau (17) des parois latérales (5) et/ou du toit.

13. Ensemble de coffre selon la revendication 12,
**caractérisé en ce que**
les éléments de support (19, 20) et/ou les éléments de type montant (35), au moins partiellement à l'extérieur des zones de raccord (18) des éléments de panneau (17), sont reliés, notamment collés, respectivement aux éléments de panneau (17) reliés entre eux par les zones de raccord (18).

14. Ensemble de coffre selon la revendication 12 ou 13,
**caractérisé en ce que**
les éléments de support (19, 20) et/ou les éléments de type montant (35) présentent respectivement un logement (33) pour loger, au moins partiellement, une zone de raccord (18) d'éléments de panneau (17) adjacents, notamment s'étendant latéralement en direction de l'espace de chargement (8) et **en ce que**, de préférence, les éléments de support (19, 20) et/ou les éléments de type montant (35) sont en appui avec les surfaces d'appui (34), sur les côtés opposés des zones de raccord (18), sur les éléments de panneau (17) associés, sont notamment collés sur les éléments de panneau (17) associés.

15. Ensemble de coffre selon l'une des revendications 1 à 14,
**caractérisé en ce que**
les éléments de support (19, 20) et/ou les éléments de type montant (35) sont conçus en tant que profilés, de préférence en tant que profilés métalliques, et/ou les éléments de support (19, 20) et/ou les éléments de type montant (35) sont conçus en tant que profilés creux, notamment ouverts, et/ou **en ce que** les éléments de support (19, 20) et/ou les éléments de type montant (35) présentent une section transversale, notamment au moins essentiellement continue, trapézoïdale et/ou en forme d'oméga et/ou en forme de chapeau.
